# EUROPÄISCHE PATENTSCHRIFT

(11) **EP 1 098 125 B1**
(45) Veröffentlichungstag und Bekanntmachung des Hinweises auf die Patenterteilung: **17.03.2004**
(21) Anmeldenummer: 99121841.3
(22) Anmeldetag: 04.11.1999
(51) Int. Cl.: F16L 33/22

(54) **Verfahren zur Herstellung einer unlösbaren Klemmverbindung und zweiteiliger Klemmverbinder**
Method of making an unreleasable clamping connection and two-part clamping connector
Procédé pour la réalisation d'un accouplement de serrage et connecteur à serrage à deux pièces

(43) Veröffentlichungstag der Anmeldung: 09.05.2001
(73) Patentinhaber: REHAU AG + Co, 95111 Rehau (DE)
(72) Erfinder: Müller, Carsten, 95111 Rehau (DE)

(56) Entgegenhaltungen:
- EP-A- 0 105 005
- GB-A- 913 031

## Beschreibung

Die Erfindung betrifft ein Verfahren zur Herstellung einer unlösbaren Klemmverbindung für Rohre aus polymeren Werkstoffen, wobei ein als zylindrische Rohrhülse ausgebildetes Anschlußstück mit seinem am Außenumfang gerippten Steckbereich in das aufgeweitete Rohrende eingesetzt und ein zylindrisches Klemmstück zur Herstellung der Klemmverbindung zwischen dem Rohrende und dem eingesetzten Steckbereich des Anschlußstückes verwendet wird, wobei ausschließlich ein Klemmstück aus drei oder mehr zusammenhängenden und aneinanderliegenden spiralig verlaufenden Wicklungen verwendet wird.

In der DE 42 39 705 C2 ist eine gattungsgemäße Klemmverbindung beschrieben, die aus einer Klemmhülse mit Innenkontur und einem Fitting-Grundkörper besteht. Der Fitting-Grundkörper besitzt einen Bund und daran anschließend eine zylindrische Stützhülse mit mehreren umlaufenden Rippen, auf die sich ein Rohrende mit aufgeweitetem Querschnitt aufstecken läßt. Dieses Rohrende wird anschließend durch eine Klemmhülse kontrolliertverpreßt. Bei diesem Verpreßvorgang werden die zwischen der Klemmhülse und dem Fitting-Grundkörper mit dem angeformten Bund und der Stützhülse gebildeten Hohlräume durch das verpreßte polymere Material ausgefüllt.

Diese Klemmhülse des bekannten Standes der Technik besitzt eine Innenkontur, die jeweils von beiden Hüsenenden ausgehend bis zur Mitte der Klemmhülse hin als konisch sich verengende oder kombiniert konisch/konvex sich verengende Bohrung ausgeführt ist. Durch diese Innenkontur der Klemmhülse ist es gleichgültig, wie die Hülse vor dem Aufschieben des Rohrendes auf den Fitting-Grundkörper, auf das Rohr aufgesteckt worden ist. Die Symmetrie der Innenkontur der Klemmhülse bewirkt, daß diese unabhängig davon, wie sie auf das Rohrende aufgesteckt wird, verwendbar ist. Diese bekannte Innenkontur bedeutet aber auch, daß in der Mitte der Klemmhülse ein umlaufender Grat vorhanden ist.

Der Klemmverbindung mit dieser Klemmhülse haftet daher der Nachteil an, daß die aufgepreßte Klemmhülse eine Neigung hat, auf diesem Grat zu wackeln. Außerdem ist es technisch schwierig, zur Fertigung und Kontrolle den Innendurchmesser bzw. das Volumen der Klemmhülse festzustellen und eine koaxiale Führung der Klemmhülse beim Aufpreßvorgang zu gewährleisten.

Die GB 913 031 beschreibt einen flexiblen Schlauch, der am Anschlußbereich ein Kopplungselement umfaßt, dessen rohrförmige Verlängerung in das Schlauchvolumen einsteckbar ist, wobei eine zylindrische Hülse die Steckverbindung umschließt. Damit soll der Zusammenbau einer Steckverbindung mit dem Schlauch einfach erreicht werden.

Der Klemmverbindung mit dieser Klemmhülse haftet daher der Nachteil an, daß die aufgepreßte Klemmhülse eine Neigung hat, auf diesem Grat zu wackeln. Außerdem ist technisch schwierig, zur Fertigung und Kontrolle den Innendurchmesser bzw. das Volumen der Klemmhülse festzustellen und eine koaxiale Führung der Klemmhülse beim Aufpreßvorgang zu gewährleisten.

Aus der DE 38 36 124 C3 ist eine weitere gattungsgemäße Klemmverbindung bekannt. Auch diese Klemmverbindung besitzt ein als Rohrhülse ausgebildetes Verbindungsstück, welches einen in das Rohrende einzusetzenden, mit Umfangsrippen versehenen Steckbereich aufweist. Ferner ist auch hier die axial zur Rohrachse bewegbare Schiebehülse beschrieben, die unter Herstellung der Klemmverbindung über das Rohrende mit dem eingesetzten Steckbereich überschiebbar ist. Die Umfangsrippen des Steckbereiches der Rohrhülse sind dabei so ausgebildet, daß die dem Flanschansatz der Rohrhülse zugewandte erste Rippe die folgenden Rippen in der Höhe überragt und mit ihrer den folgenden Rippen zugewandten Außenflanke als Anschlag für die Stirnfläche des aufgeschobenen Rohres dient. Diese Rippe bildet mit ihrer Innenflanke und der Innenflanke des Flanschansatzes sowie dem am Flanschansatz anliegenden freien Ende der Schiebehülse eine Aufnahme, für beim Aufpressen der Schiebehülse verpreßtes Rohrmaterial.

In der DE 36 08 843 C2 wird ein gattungsgemäßes Verfahren zur Herstellung einer Klemmverbindung für Rohre aus polymeren Werkstoffen beschrieben. Dabei wird ein als zylindrische Rohrhülse ausgebildetes Verbindungsstück mit seinem am Außenumfang gerippten Steckbereich in das Rohrende eingesetzt. Danach wird eine axial zur Rohrachse bewegliche zylindrische Schiebehülse unter Herstellung der Klemmverbindung über das Rohrende mit dem eingesetzten Steckbereich aufgepreßt. Der Vorteil dieses Verfahrens wird darin gesehen, daß durch eine Aufweitung des Rohrendes bis zum Umfang der Rippen des Steckbereiches der lichte Durchmesser des als Rohrhülse ausgebildeten Verbindungsstückes dem lichten Durchmesser des Kunststoffrohres angepaßt werden kann. Dadurch werden Strömungsverluste und Geräusche ausgeschlossen und die Gefahr einer Erosionskorrosion verringert. Als weiterer Vorteil wird gesehen, daß die erzielbare Klemmverbindung eindeutig unlösbar und darüber hinaus sehr einfach zu montieren ist.

Die nach dem Stand der Technik bekannten Klemmverbindungen erfüllen ihre Aufgabe, nämlich eine unlösbare Verbindung zwischen dem als Rohrhülse ausgebildeten Verbindungsstück und dem Rohrende aus polymerem Werkstoff herzustellen, in anerkannter Weise. Bedingt durch den Einsatz von Rohren unterschiedlicher Druckstufen und damit auch unterschiedlicher Wandstärken ist es erforderlich, auch entsprechend verschiedene Schiebe- bzw. Klemmhülsen zu verwenden. Dies erhöht jedoch den Herstellungs- bzw. Lageraufwand und damit die Kosten.

Hier setzt die Erfindung ein, die es sich zur Aufgabe gestellt hat, die aufgezeigten Nachteile des Standes der Technik zu vermeiden und ein Verfahren zur Herstellung einer Klemmverbindung anzugeben, die dauerhaft dicht ist, die das Erfordernis der Unlösbarkeit erfüllt und die kostengünstig bei Rohren unterschiedlicher Druckstufen einsetzbar ist.

Die Aufgabe der Erfindung wird durch die Merkmale der Ansprüche 1, 2 und 3 gelöst.

Erfindungsgemäß wird hierzu vorgeschlagen, daß zur Herstellung der Klemmverbindung in einem ersten Verfahrensschritt die spiralig verlaufenden Wicklungen über das Rohrende aufgeschoben werden. In einem zweiten Verfahrensschritt wird das Rohrende bis zum Außenumfang des gerippten Steckbereichs des Anschlußstückes aufgeweitet und der gerippte Steckbereich des Anschlußstückes in das aufgeweitete Rohrende eingesetzt. In einem dritten Verfahrensschritt werden die spiralig verlaufenden Wicklungen axial zur Rohrachse verschoben und über die sich aus der radialen Kraft der spiralig verlaufenden Wicklungen ergebende Flächenpressung das Rohrende kraftschlüssig mit dem eingesetzten Steckbereich des Anschlußstückes verbunden wird.

Der Vorteil des erfindungsgemäßen Verfahrens wird darin gesehen, daß die Herstellung der Klemmverbindung bei Rohren unterschiedlicher Druckstufen und damit unterschiedlicher Wandstärken mit einem Klemmstück erfolgen kann. Dadurch reduziert sich zum einen der Lagerbestand erheblich und zum anderen sind Verwechslungen durch die Verwendung verschiedener Schiebe- bzw. Klemmhülsen ausgeschlossen.
Ein weiterer entscheidender Vorteil wird darin gesehen, daß das erfindungsgemäße Klemmstück, unabhängig davon, wie es auf das Rohrende aufgebracht wird, verwendbar ist.

Die Herstellungskosten des erfindungsgemäßen Klemmstückes sind im Vergleich zu dem im Stand der Technik bekannten Schiebe- bzw. Klemmhülsen wesentlich niedriger.

Die Wirkungsweise der zusammenhängenden und aneinanderliegend spiralig verlaufenden Wicklungen kompensiert in vorteilhafter Weise die Kriechneigung des polymeren Werkstoffes der Rohre und führt dadurch zu einer garantiert dauerhaften Dichtwirkung der Klemmverbindung.
Die für die Herstellung der Klemmverbindung notwendigen Kräfte werden erheblich verringert, so daß die benötigten Werkzeuge kleiner und kompakter gebaut werden können und dadurch der Kostenaufwand erheblich reduziert wird.
Durch die geringen erforderlichen Kräfte für die Herstellung der Klemmverbindung ist es möglich, daß für die zum Einsatz kommenden Anschlußstücke ebenfalls ein polymerer Werkstoff verwendet werden kann. Dies bedeutet im Vergleich zu dem im Stand der Technik bekannten Klemmverbindungen eine wesentliche Material- und damit Kostenreduzierung. Ein weiterer wichtiger Vorteil wird darin gesehen, daß sich der polymere Werkstoff des Rohrendes in die Hohlräume zwischen den aneinanderliegenden spiralig verlaufenden Wicklungen einformt und somit eine zusätzliche Abzugssicherung der Klemmverbindung erreicht wird.

In einer weiteren vorteilhaften Ausführungsform der Erfindung werden wenigstens drei zusammenhängende und aneinanderliegende spiralig verlaufende Wicklungen über das Rohrende aufgeschoben und zusammen mit diesem aufgeweitet.
Danach wird der gerippte Steckbereich des Anschlußstückes in das aufgeweitete Rohrende eingesteckt.
Über die sich aus der radialen Kraft der spiralig verlaufenden Wicklungen ergebende Flächenpressung wird anschließend das Rohrende kraftschlüssig mit dem gerippten Steckbereich des Anschlußstückes verbunden. Hier kann ebenfalls die Klemmverbindung ohne Verpreßwerkzeug und damit ohne zusätzlichen Aufwand realisiert werden.

In einer weiteren bevorzugten Ausführungsform ist die radiale Kraft der spiralig verlaufenden Wicklungen größer als die Rückschrumpfkraft des polymeren Werkstoffes des Rohrendes ist. Das erfindungsgemäße Verfahren bewirkt somit eine unlösbare und dichte Klemmverbindung, die schnell und einfach herstellbar ist.

Als weiterer Vorteil des erfindungsgemäßen Verfahrens kann hervorgehoben werden, daß die spiralig verlaufenden Wicklungen so dimensioniert werden, daß die sich aus der radialen Kraft ergebende Flächenpressung auf den polymeren Werkstoff des Rohrendes einerseits ein Einformen des polymeren Werkstoffes in die gewellten radialen Hohlräume zwischen den spiralig verlaufenden Wicklungen ermöglicht und andererseits das Kriechen und Relaxieren des polymeren Werkstoffes aus der Verbindung verhindert.

In vorteilhafter Weise sind die spiralig verlaufenden Wicklungen in einem runden Querschnitt ausgeführt, wobei dieser innen hohl sein kann. Werden spiralig verlaufende Wicklungen höhere Flächenpressungen benötigt, können mehreckige Querschnitte zum Einsatz kommen, die ein höheres Flächenträgheitsmoment besitzen.

Der Querschnitt der spiralig verlaufenden Wicklungen hat dabei erfindungsgemäß eine Fläche von wenigstens 0,01 mm².
In einer weiteren vorteilhaften Ausführung ist es möglich, daß die spiralig verlaufenden Wicklungen so dimensioniert sind, daß sie das Rohrende auf der gesamten Länge des Steckbereiches des Anschlußstückes kraftschlüssig umschlingen.

Auch kann in vorteilhafter Weise bei ausreichender Dimensionierung der spiralig verlaufenden Wicklungen das Rohrende mit dem eingesetzten Steckbereich des Anschlußstückes nur teilweise kraftschlüssig umgriffen werden, ohne daß der Festsitz und die Dichtheit der Klemmverbindung gefährdet ist.

Bei einer ebenfalls vorteilhaften Ausführungsform umschlingen die spiralig verlaufenden Wicklungen nicht nur das aufgeweitete Rohrende mit dem eingesetzten Steckbereich des Anschlußstückes, sondern auch einen Teil des unaufgeweiteten Rohres bzw. Schlauches. Dadurch wird in vorteilhafter Weise erreicht, daß die erste Kante des Steckbereiches des Anschlußstückes bereits als Dichtkante wirken kann.

### Ausführungsbeispiele

| | Bsp. 1 |
|---|---|
| Außendurchmesser des Rohrendes | 16 mm |
| Außendurchmesser der Wicklungen | 2,0 mm |
| Anzahl der Wicklungen | 12 |
| Material der Wicklungen | Stahl |
| Flächenpressung | 17,4 N/mm² |

| | Bsp. 2 |
|---|---|
| Außendurchmesser des Rohrendes | 16 mm |
| Breite der Wicklungen | 2,0 mm |
| Höhe der Wicklungen | 2,3 mm |
| Anzahl der Wicklungen | 12 |
| Material der Wicklungen | Stahl |
| Flächenpressung | 22,9 N/mm² |

In den Zeichnungen sind verschiedene Ausführungsformen der mitdem erfindungsgemäßen Verfahren hergestellten Klemmverbindungen schematisch dargestellt, es zeigt:
- Figur 1:: eine Explosionsdarstellung der Einzelteile der Klemmverbindung
- Figur 2:: einen Querschnitt durch eine Klemmverbindung mit dem Klemmstück
- Figur 3:: einen Querschnitt durch eine Klemmverbindung mit dem Klemmstück in einer weiteren Ausführungsform
- Figur 4:: einen Querschnitt durch eine Klemmverbindung mit dem Klemmstück in einer weiteren Ausführungsform

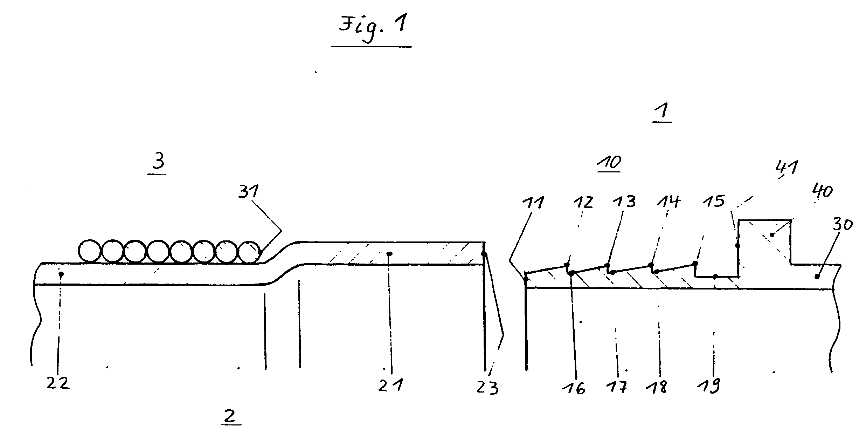

In Figur 1 ist in einer beispielhaften Ausführung in der rechten Darstellung das Anschlußstück 1 gezeigt. Dieses Anschlußstück 1 besteht aus dem Steckbereich 10, aus dem Flanschansatz 20 und dem Fittingkörper 30.

Der Fittingkörper 30 kann ein T-Stück, ein Bogen, ein Abzweig und dergleichen sein. Der Steckbereich 11 zeigt die am äußeren Umfang im Abstand voneinander angeordneten sägezahnartig umlaufende Spitzen 12, 13, 14, 15, die zwischen sich die Nuten 16, 17, 18, 19 einschließen.

Die Nut 19 ist dabei von der Spitze 15 und der Stirnfläche 31 des Flanschansatzes 20 begrenzt. Der Flanschansatz 20 ist einstückig radial umlaufend am Anschlußstück 1 angeformt.

Das Anschlußstück 1 kann einstückig aus Metall oder polymerem Werkstoff geformt sein. In Achsrichtung schließt sich nach links das Rohr 2 aus polymerem Werkstoff an, welcher mit dem aufgeweiteten Bereich 21 in unmittelbarer Nähe der Kante 11 des Steckbereiches 10 dargestellt ist. Über dem Rohr 2 aus polymerem Werkstoff ist im unaufgeweiteten Bereich 22 das Klemmstück 3 geschoben, welches beispielhaft aus acht spiralig verlaufenden Wicklungen besteht.

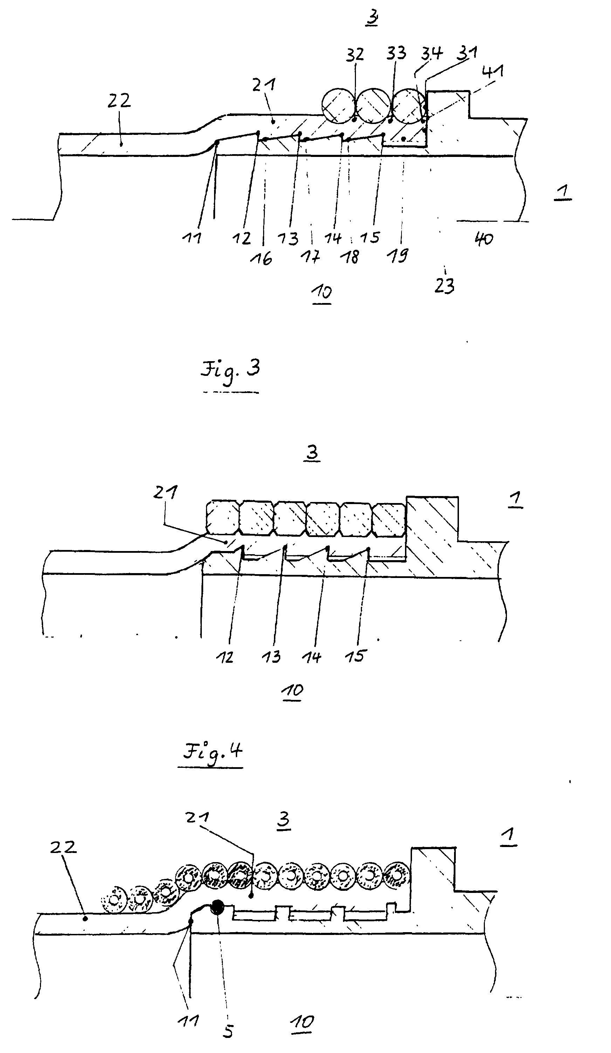

In Figur 2 ist der Querschnitt durch eine erfindungsgemäß hergestellte Klemmverbindung dargestellt. Das aufgeweitete Rohrende 21 ist dabei auf den Steckbereich 10 des Anschlußstückes 1 soweit aufgeschoben bis die Stirnwand 23 an dem zugeordneten Wandbereich 31 des Flanschansatzes 20 anstößt. Danach ist das Klemmstück 3, welches beispielhaft aus drei spiralig verlaufende Wicklungen besteht, ebenfalls über das aufgeweitete Rohrende 21 und den Steckbereich 10 soweit aufgeschoben worden, bis seine Stirnfläche 31 den zugeordneten Wandbereich 31 des Flanschansatzes 20 berührt. Während dieses Aufschiebevorganges wird aufgrund der Tatsache, daß der Innendurchmesser des Klemmstückes 3 kleiner als der Außendurchmesser des auf den Steckbereich 10 aufgesteckten, aufgeweiteten Rohrendes 21 ist, der polymere Werkstoff des Rohrendes 21 zunehmend in die nutenförmigen Vertiefungen 16, 17, 18, 19 eingepreßt und die sägezahnartig umlaufenden Spitzen 12, 13, 14 ,15 dringen in die Wandung des Rohres 2 ein. Der polymere Werkstoff formt sich in die Hohlräume 32, 33 zwischen den spiralig verlaufende Wicklungen und in den Hohlraum 34 zwischen dem Wandbereich 31 des Flanschansatzes 20 und der Nut 19 Stirnfläche 31 des Klemmstückes 3 ein.

Diese Verfüllung der Nutenquerschnitte 16, 17, 18, 19 und der Hohlräume 32, 33, 34 mit dem polymeren Werkstoff des Rohrendes 21 bewirkt eine dauerhafte Verklemmung des Rohres 2 auf dem Steckbereich 10 des Anschlußstückes 1.

Ein Querschnitt durch eine Klemmverbindung mit dem Klemmstück in einer weiteren Ausführungsform ist in Figur 3 dargestellt. Das Klemmstück 3 besteht hierbei beispielhaft aus sechs spiralig verlaufenden Wicklungen, welche einen mehreckigen Querschnitt haben und über die gesamte Länge des Steckbereiches 10 des Anschlußstückes 1 auf das Rohrende 21 einwirken.
Die sägezahnartig umlaufenden Spitzen 13, 14, 15, die vorteilhafterweise die Form gleichschenkeliger Dreiecke aufweisen, werden dadurch sehr tief in die Wandung des Rohrendes 21 eingepreßt.

Eine weitere vorteilhafte Ausführungsform ist in Figur 4 dargestellt. Hier besteht das Klemmstück 3 aus zwölf spiralig verlaufenden Wicklungen, welche innen einen Hohlraum aufweisen. In dieser beispielhaft dargestellten Ausführungsform umschlingen die spiralig verlaufenden Wicklungen des Klemmstückes 3 nicht nur das aufgeweitete Rohrende 21 mit dem eingesetzten Steckbereich 10 des Anschlußstückes 1, sondern auch einen Teil des unaufgeweiteten Rohres 22. Dadurch wird erreicht, daß die aus der Federkraft resultierende Flächenpressung vom unaufgeweiteten Rohr 22 bis zum aufgeweiteten Rohrende 21 kontinuierlich ansteigt und über den Steckbereich 10 des Anschlußstückes 1 gleichmäßig verteilt ist. Weiterhin vorteilhaft bei dieser Ausführungsform ist, daß die erste Kante 11 des Steckbereiches 10 des Anschlußstückes 1 bereits als Dichtkante wirken kann.
Im Steckbereich 10 des Anschlußstückes 1 ist weiterhin ein Dichtring 5 dargestellt, der in einer Auskehlung liegt und eine zusätzliche Dichtfunktion übernimmt.

## Patentansprüche

1. Verfahren zur Herstellung einer unlösbaren Klemmverbindung für Rohre (2) aus polymeren Werkstoffen, wobei ein als zylindrische Rohrhülse ausgebildetes Anschlußstück (1) mit seinem am Außenumfang gerippten Steckbereich (10) in das aufgeweitete Rohrende (21) eingesetzt und ein zylindrisches Klemmstück (3) zur Herstellung der Klemmverbindung zwischen dem Rohrende (21) und dem eingesetzten Steckbereich (10) des Anschlußstückes (1) verwendet wird, wobei ausschließlich ein Klemmstück (3) aus drei oder mehr zusammenhängenden und aneinanderliegenden spiralig verlaufenden Wicklungen verwendet wird , **dadurch gekennzeichnet, daß** in einem ersten Verfahrensschritt die spiralig verlaufenden Wicklungen auf das Rohrende (21) aufgeschoben werden, daß in einem zweiten Verfahrensschritt das Rohrende (21) bis zum Außenumfang des gerippten Steckbereiches (10) des Anschlußstückes (1) aufgeweitet und der gerippte Steckbereich (10) des Anschlußstückes (1) in das aufgeweitete Rohrende (21) eingesteckt wird, daß in einem dritten Verfahrensschritt die spiralig verlaufenden Wicklungen axial zur Rohrachse verschoben werden und über die sich aus der radialen Kraft der spiralig verlaufenden Wicklungen ergebende Flächenpressung das Rohrende (21) kraftschlüssig mit dem eingesteckten gerippten Steckbereich (10) des Anschlußstückes (1) verbunden wird.

2. Verfahren zur Herstellung einer unlösbaren Klemmverbindung für Rohre (2) aus polymeren Werkstoffen, wobei ein als zylindrische Rohrhülse ausgebildetes Anschlußstück (1) mit seinem am Außenumfang gerippten Steckbereich (10) in das aufgeweitete Rohrende (21) eingesetzt und ein zylindrisches Klemmstück (3) zur Herstellung der Klemmverbindung zwischen dem Rohrende (21) und dem eingesetzten Steckbereich (10) des Anschlußstückes (1) verwendet wird, wobei ausschließlich ein Klemmstück (3) aus drei oder mehr zusammenhängenden und aneinanderliegenden spiralig verlaufenden Wicklungen verwendet wird, **dadurch gekennzeichnet, daß** die spiralig verlaufenden Wicklungen über das Rohrende (21) aufgeschoben und zusammen mit dem Rohrende (21) bis zum Außenumfang des gerippten Steckbereiches (10) des Anschlußstückes (1) aufgeweitet werden und der gerippte Steckbereich (10) des Anschlußstückes (1) in das aufgeweitete Rohrende (21) eingesteckt wird, und daß über die sich aus der radialen Kraft der spiralig verlaufenden Wicklungen ergebende Flächenpressung das Rohrende (21) kraftschlüssig mit dem eingesetzten gerippten Steckbereich (10) des Anschlußstückes (1) verbunden wird.

3. Zweiteiliger Klemmverbinder für Rohre (2) aus polymerem Werkstoff mit einem zylindrischen Anschlußstück (1), das einen am Außenumfang gerippten Steckbereich (10) besitzt, und einem zylindrischen Klemmstück (3), wobei das zylindrische Klemmstück (3) ausschließlich aus drei oder mehr zusammenhängenden und aneinanderliegenden spiralig verlaufenden Wicklungen besteht, **dadurch gekennzeichnet, daß** die radiale Federkraft der spiralig verlaufenden Wicklungen des Klemmstückes (3) gleich oder größer als die Rückschrumpfkraft des polymeren Werkstoffes des Rohres (2) ist.

4. Klemmverbinder nach Anspruch 3, **dadurch gekennzeichnet, daß** die Querschnittsfläche der spiralig verlaufenden Wicklungen des Klemmstückes (3) wenigstens 0,01 mm² ist.

## Claims

1. Method for the production of a permanent clamped connection for pipes (2) made of polymer materials, in which a connecting piece designed as a cylindrical, tubular sleeve (1) is inserted with its peripherally ribbed plug-in section (10) into the extended end of the pipe (21) and a cylindrical clamp (3) is used to produce the connection between the end of the pipe (21) and the inserted plug-in section (10) of the connecting piece (1) and in which only one clamp (3) consisting of three or more joined and touching spiral windings is used, **characterised in that** in a first step of the process, the spiral windings are pushed onto the end of the pipe (21) and in a second step of the process, the end of the pipe (21) is extended to the outside diameter of the ribbed plug-in section (10) of the connecting piece (1) and the ribbed plug-in section (10) of the connecting piece (1) is inserted into the extended end of the pipe (21) and in a third step of the process, the spiral windings are moved axially to the axis of the pipe and the contact pressure produced by the radial force of the spiral coils joins the end of the pipe (21) tensionally with the inserted, ribbed plug-in section (10) of the connecting piece (1).

2. Method for the production of a permanent clamped connection for pipes (2) made of polymer materials, in which a connecting piece designed as a cylindrical, tubular sleeve (1) is inserted with its peripherally ribbed plug-in section (10) into the extended end of the pipe (21) and a cylindrical clamp (3) is used to produce the connection between the end of the pipe (21) and the inserted plug-in section (10) of the connecting piece (1) and in which only one clamp (3) consisting of three or more joined and touching spiral windings is used, **characterised in that**, the spiral windings are pushed onto the end of the pipe (21) and are extended together with the end of the pipe (21) to the outside diameter of the ribbed plug-in section (10) of the connecting piece (1) and the ribbed plug-in section (10) of the connecting piece (1) is inserted into the extended end of the pipe (21), and the contact pressure produced by the radial force of the spiral coils joins the end of the pipe (21) tensionally with the inserted, ribbed plug-in section (10) of the connecting piece (1).

3. Two-part clamp connector for pipes (2) made of polymer materials with a cylindrical connecting piece (1) equipped at its periphery with a ribbed plug-in section (10) and a cylindrical clamp (3), in which the cylindrical clamp (3) consist of only three or more joined and touching spiral windings, **characterised in that**, the radial spring force of the spiral windings of the clamp (3) is equal to or greater than the shrinking force of the polymer material of the pipe (2).

4. Clamp connector according to Claim 3, **characterised in that**, the cross-sectional area of the spiral windings of the clamp (3) is at least 0.01 mm².

## Revendications

1. Procédé de fabrication d'un assemblage par serrage indesserrable pour des tubes (2) en matériaux polymères, un raccord conçu en forme de douille cylindrique (1) avec une zone d'emboîtage (10) nervurée sur le pourtour extérieur (10) étant inséré dans l'extrémité évasée du tube (21) et un élément de serrage cylindrique (3) pour la réalisation de l'assemblage par serrage étant utilisé entre l'extrémité du tube (21) et la zone d'emboîtage (10) de l'élément de raccordement (1), un élément de serrage (3) constitué de trois enroulements ou davantage disposés en spirale, de manière continue et contiguë, étant exclusivement employé, **caractérisé en ce que** lors d'une première étape du procédé les enroulements en spirale sont glissés sur l'extrémité du tube (21), que dans une deuxième étape du procédé l'extrémité du tube (21) est évasée jusqu'au pourtour extérieur de la zone d'emboîtage nervurée (10) de l'élément de raccordement (1) et que la zone d'emboîtage nervurée (10) de l'élément de raccordement (1) est emboîtée dans l'extrémité évasée du tube (21), que dans une troisième étape du procédé les enroulements en spirale sont décalés dans le sens axial par rapport à l'axe du tube et que l'extrémité du tube (21) est assemblée par adhérence avec la zone d'emboîtage nervurée (10) emboîtée de l'élément de raccordement (1) sous l'effet de la pression superficielle produite par la force radiale des enroulements en spirale.

2. Procédé de fabrication d'un assemblage par serrage indesserrable pour des tubes (2) en matériaux polymères, un raccord conçu en forme de douille cylindrique (1) avec une zone d'emboîtage (10) nervurée sur le pourtour extérieur (10) étant inséré dans l'extrémité évasée du tube (21) et un élément de serrage cylindrique (3) pour la réalisation de l'assemblage par serrage étant utilisé entre l'extrémité du tube (21) et la zone d'emboîtage (10) de l'élément de raccordement (1), un élément de serrage (3) constitué de trois enroulements ou davantage disposés en spirale, de manière continue et contiguë, étant exclusivement employé, **caractérisé en ce que** les enroulements en spirale sont glissés sur l'extrémité du tube (21) et sont évasés avec l'extrémité du tube (21) jusqu'au pourtour extérieur de la zone d'emboîtage nervurée (10) de l'élément de raccordement (1) et que l'extrémité du tube (21) est assemblée par adhérence avec la zone d'emboîtage nervurée (10) emboîtée de l'élément de raccordement (1) sous l'effet de la pression superficielle produite par la force radiale des enroulements en spirale.

3. Raccord par serrage en deux parties pour des tubes (2) en matériau polymère avec un élément de raccordement cylindrique (1), présentant une zone d'emboîtage nervurée (10) sur le pourtour extérieur et avec un élément de serrage (3), celui-ci étant constituée exclusivement de trois enroulements ou davantage disposés en spirale, **caractérisé en ce que** la force de ressort radiale des enroulements en spirale de l'élément de serrage (3) est égale ou supérieure à la force de retrait du matériau polymère du tube (2).

4. Raccord par serrage selon la revendication 3, **caractérisé en ce que** la surface de la section des enroulements en spirale de l'élément de serrage (3) est au moins égale à 0,01 mm².
